# EUROPÄISCHE PATENTSCHRIFT

(11) **EP 1 544 786 B1**
(45) Veröffentlichungstag und Bekanntmachung des Hinweises auf die Patenterteilung: **03.10.2007**
(21) Anmeldenummer: 04005196.3
(22) Anmeldetag: 04.03.2004
(51) Int. Cl.: G06K 19/077

(54) **Datenträger und Verfahren zur Herstellung desselben**
Data carrier and production method therefor
Support de données et son procédé de fabrication

(30) Priorität: 17.12.2003 EP 03028957
(43) Veröffentlichungstag der Anmeldung: 22.06.2005
(73) Patentinhaber: ASSA ABLOY Identification Technologies Austria GmbH, 6175 Kematen (AT)
(72) Erfinder: Wolny, Robert, 6063 Rum (AT); Schwab, Ronald, 6094 Axams (AT)
(74) Vertreter: Ostermann, Thomas

(56) Entgegenhaltungen:
- EP-A- 1 130 542
- DE-C- 10 016 715
- DE-U- 29 824 003
- HAGHIRI YAHYA: "Vom Plastik zur Chipkarte" VOM PLASTIK ZUR CHIPKARTE: WEGWEISER ZUM AUFBAU UND ZUR HERSTELLUNG VON CHIPKARTEN, XX, XX, 1999, Seiten 26-29,240, XP002254868

## Beschreibung

Die Erfindung betrifft einen Datenträger im Mehrlagenaufbau nach dem Oberbegriff des Patentanspruchs 1.

Aus der EP 0 742 926 B1 ist ein Datenträger im Mehrlagenaufbau bekannt, wobei eine Kernlage aus Karton und eine die Kernlage bedeckende Decklage aus einem thermoplastischen Material gebildet sind. Die Kernlage des Datenträgers ist aus einem Kartonmaterial hergestellt und weist eine Ausnehmung zur Aufnahme eines Chipmoduls mit freiliegenden Kontaktflächen auf. Die so für den kontaktbehafteten Betrieb ausgelegte Chipkarte kann durch Bereitstellung einer Papier- oder Kartonrolle in Endlostechnik gefertigt werden.

Aus der EP 1 130 542 A1 ist ein Datenträger im Mehrlagenaufbau bekannt. Der Datenträger weist eine Kernlage sowie zu beiden Seiten der Kernlage sich anschließende Decklagen auf, die aus einem Kartonmaterial bestehen. Die Kernlage besteht aus einer einzigen Kunststoffschicht, auf der eine Antennenspule sowie ein Chip aufgebracht sind.

Aus der DE 100 16 715 C ist eine mehrlagige Chipkarte aus Papierschichten bekannt bei der eine Papierschicht zur Aufnahme eines Halbleiterchips dient. Die andere Papierschicht dient zur Aufnahme einer Spule mit Leiterbahnen. Eine Kernlage aus einem Kunststoffmaterial ist dort nicht offenbart.

Aus der 298 14 003 U1 ist die Schaltung eines RF-Transcivers bekannt, der in schlüssellosen Zugangssystemen mit einem bidirektionalen Datenaustausch oder in bidirektionalen telemetrischen Systemen verwendbar ist.

Aufgabe der vorliegenden Erfindung ist es, einen kontaktlosen Datenträger im Mehrlagenaufbau derart auszugestalten, dass auf kostengünstige Weise ein einfacher Aufbau und eine einfache Beschriftung des Datenträgers gewährleistet ist

Zur Lösung dieser Aufgabe weist die Erfindung die Merkmale des Patentanspruchs 1 auf.

Nach der Erfindung ist es vorgesehen, dass eine Kernlage aus einem thermoplastischen Material eine langzeitstabile Basislage für den Datenträger bildet, wobei die Decklagen zu beiden Seiten der Kernlage vorteilhaft kostengünstig bereitgestellt werden können. Erfindungsgemäß ist die Kernlage mehrschichtig ausgebildet, wobei eine mittlere erste Kunststoffschicht die Antennenspule sowie den Chip trägt. Die Kernlage weist somit planare Oberflächen auf, so dass das Aufbringen der Decklagen aus Karton einfach gestaltet werden kann.

Nach der Erfindung ist eine thermosensitive Beschichtung lediglich partiell auf einer Außenseite der Decklage aufgebracht wird. Vorzugsweise kann dann durch Siebdrucken eine Beschriftung auf die in einem ersten Bereich der Außenseite der Decklage aufgebrachten thermosensitiven Beschichtung aufgebracht werden. Hierbei kann es sich um alphanumerische Zeichen oder um Bilder handeln.

Nach einer bevorzugten Ausführungsform des erfindungsgemäßen Verfahrens wird eine Erhabenheit einer Oberfläche des Datenträgers infolge des Aufbringens der thermosensitiven Beschichtung dadurch verhindert, dass die Decklage in einem zweiten Teilbereich der Außenseite derselben, der nicht von der thermosensitiven Beschichtung bedeckt wird, von einer transparenten oder nicht transparenten Ausgleichsschicht vollflächig abgedeckt ist. Hierbei kann es sich um eine PVC-Ausgleichsschicht oder eine THW-Ausgleichsschicht handeln. Vorteilhaft weist der Datenträger somit eine konstante Dicke auf, wobei zwischen einem Beschriftungsbereich (erster Teilbereich) und einem Nichtbeschriftungsbereich (zweiter Teilbereich) unterschieden wird.

Weitere Vorteile der Erfindung ergeben sich aus den weiteren Unteransprüchen.

Ein Ausführungsbeispiel wird nachfolgend anhand einer Figur beschrieben.

Es zeigt:
- Figur: einen Querschnitt durch einen erfindungsgemäßen Datenträger.

Ein Datenträger 1 ist als ein Transponder im Scheckkartenformat ausgebildet. Er weist einen mehrlagigen Kartenaufbau auf mit einer Kernlage 2 sowie eine flächig an dieselbe anschließende erste Decklage 3 und eine zweite Decklage 4.

Die Kernlage 2 besteht aus einer mittleren Kunststoffschicht 5 sowie sich an dieselbe flächig anschließenden ersten äußeren Kunststoff 6 sowie einer zweiten äußeren Kunststoffschicht 7.

Die mittlere Kunststoffschicht 5 dient als Träger für eine Antennenspule 8 sowie einen Chip, der mit der Antennenspule 8 kontaktiert ist. Ein Spulendraht 10 der Antennenspule 8 kann mittels einer Verlege-/Verbindungseinrichtung auf die als Substrat dienende mittlere Kunststoffschicht 5 aufgebracht werden. Die haftende Verbindung der Antennenspule 8 bzw. des Chips wird durch eine Ultraschalleinwirkung unterstützt. Die Verbindung des Spulendrahtes 10 bzw. des Chips mit der mittleren Kunststoffschicht 5 kann alternativ durch Eindrücken des Spulendrahtes 10 in die durch Erwärmung erweichte Oberfläche der mittleren Kunststoffschicht 5 erfolgen.

Die mittlere Kunststoffschicht 5 sowie die erste äußere Kunststoffschicht 6 und die zweite äußere Kunststoffschicht 7 der Kernlage 2 können aus einem PVC-Material oder einem Polycarbonat-Material oder einem Polyester-Material oder einem ABS-Material bestehen.

Die erste Decklage 3 und die zweite Decklage 4 sind jeweils einschichtig ausgebildet, wobei die erste Decklage 3 an der ersten äußeren Kunststoffschicht 6 und die zweite Decklage 4 an der zweiten äußeren Kunststoffschicht 7 der Kernlage 2 anliegen. Die Decklagen 3, 4 sind jeweils aus einem Karton- oder Papiermaterial gefertigt.

Zur Herstellung des Transponders 1 werden die Kernlage 2, die erste Decklage 3 und die zweite Decklage 4 in der beschriebenen Anordnung aufeinandergelegt und unter Einwirkung von Wärme und Druck miteinander verbunden. Durch diesen Laminationsvorgang ergibt sich eine sichere Verbindung der Datenträgerschichten, wobei die Oberfläche des Datenträgers 1 als ein Kartonmaterial ausgebildet ist. Nachfolgend kann auf eine oder beide Decklagen 3, 4 ein Druckbild oder eine Oberflächenbeschichtung aufgebracht werden.

Nach einer nicht dargestellten alternativen Ausführungsform kann die Kernlage 2 einschichtig ausgebildet sein, wobei sie lediglich das Substrat für die Antennenspule 8 und den Chip enthält. Zur Verbindung mit den Decklagen 3, 4 ist hier zusätzlich ein Haftkleber erforderlich, der beispielsweise als Klebstoffbeschichtung vorher auf beide Seiten der Kernschicht aufgebracht werden kann. Die Aktivierung der Klebstoffbeschichtung kann beispielsweise durch Pressdruck, durch Anlegen einer elektrischen Spannung oder eines Magnetfeldes aktiviert werden. Es kann auch eine nachvernetzende Polyurethan-Klebebeschichtung bei einer relativ niedrigen Temperatur auf die nicht erwärmte Substratschicht aufgebracht werden.

Die Dicke des Datenträgers 1 kann in einem Bereich von 400 µm und 1000 µm liegen. Die Kernlage 2 kann in einem Bereich von 40 µm bis 200 µm liegen. Die Dicke der ersten Decklage 3 und der zweiten Decklage 4 kann in einem Bereich von 150 µm bis 600 µm liegen.

Nach einer weiteren alternativen Ausführungsform des Datenträgers 1 kann die Kernschicht desselben durch die Antenne 8 selbst gebildet sein. Beispielsweise kann der Datenträger lediglich durch zwei Kartondecklagen gebildet sein, wobei die Antenne 8 auf einer Innenseite eines der Decklagen aufgedruckt ist. Die bedruckte Antenne kann aus einer Silberleitpaste bestehen, die innenseitig an beiden Kartondecklagen anliegt. Hierdurch ergibt sich eine vereinfachte Herstellung eines aus einem Kartonmaterial hergestellten Datenträgers mit Transponder.

Nachdem eine Kartondecklage mit einer aufgedruckten Antenne versehen worden ist, wird diese zusammen mit einer weiteren Kartonlage zu einem Datenträger/Karte infolge der Anwendung von Wärme und Druck verbunden.

Alternativ kann die Silberleitpaste vermittels eines Klebers auf die Innenseite der Kartonlage aufgebracht werden.

Um eine kostengünstige Beschriftung des Datenträgers zu ermöglichen, wird auf einer Außenseite der aus Karton hergestellten Decklage eine thermosensitive Beschichtung lediglich partiell aufgebracht. Hierdurch ergibt sich ein erster Teilbereich der Oberfläche des Datenträgers, der ausschließlich für die Beschriftung vorgesehen ist. Bei der thermosensitiven Beschichtung kann es sich um eine reversible beschreibbaren oder irreversiblen beschreibbaren thermosensitiven Beschichtung handeln. Die Beschriftung wird vorzugsweise durch Siebdrucken auf die thermosensitive Beschichtung aufgebracht. Vor dem Aufbringen der thermosensitiven Beschichtung ist der Datenträger bereits durch laminieren von vorzugsweise zwei Kartonlagen hergestellt. Damit der Datenträger über seine gesamte Erstreckung eine konstante Dicke aufweist, ist für den Fall, dass die thermosensitive Beschichtung als Folie in einem ersten Teilbereich aufgebracht ist, ein von der thermosensitiven Beschichtung nicht erfasster zweiter Teilbereich der Decklage von einer transparenten oder nicht transparenten Ausgleichslage vollflächig abgedeckt. Die Ausgleichslage kann aus einem PVC-Material oder einem Polycarbonat-Material oder einem Polyester-Material oder einem ABS-Material oder einer THW-Folie bestehen.

Vorteilhaft wird eine brillante Oberfläche des kontaktlos betreibbaren Datenträgers geschaffen.

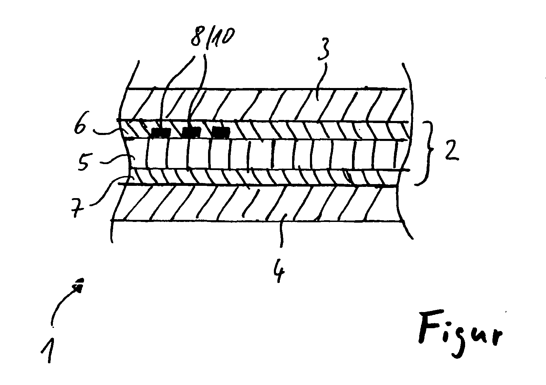

## Patentansprüche

1. Datenträger im Mehrlagenaufbau mit mindestens einer Kernlage (2) und mit mindestens einer Decklage (3, 4), die haftend miteinander verbunden sind, wobei die Kernlage (2) aus einem thermoplastischen Material und die Decklage (3, 4) aus einem Kartonmaterial bestehen, **dadurch gekennzeichnet, dass** die Kernlage (2) mehrschichtig aus einer die Antennenspule (8) und den Chip tragenden mittleren Kunststoffschicht (5) und zu beiden Seiten derselben flächig anliegenden ersten äußeren Kunststoffschicht (6) und einer zweiten äußeren Kunststoffschicht (7) besteht, dass auf einer Außenseite der Decklage (3, 4) eine thermosensitive Beschichtung partiell aufgebracht ist.

2. Datenträger nach Anspruch 1, **dadurch gekennzeichnet, dass** die Kernlage (2) aus einem PVC-Material oder einem Polycarbonat-Material oder einem Polyester-Material oder einem ABS-Material besteht.

3. Datenträger nach Anspruch 1 oder 2, **dadurch gekennzeichnet, dass** die Antennenspule (8) und/oder der Chip durch Verlegen auf die Kunststoffschicht (5) der Kernlage (2) aufgebracht ist.

4. Datenträger nach einem der Ansprüche 1 bis 3, **dadurch gekennzeichnet, dass** die erste Decklage (3) und/oder die zweite Decklage (4) mit einer Oberflächenbeschichtung und/oder mit einem Druckbild versehen ist.

5. Datenträger nach einem der Ansprüche 1 bis 4, **dadurch gekennzeichnet, dass** der Datenträger scheckkartenförmig ausgebildet ist und dass der Datenträger eine Dicke in einem Bereich von 400 µm bis 1000 µm aufweist.

6. Datenträger nach einem der Ansprüche 1 bis 5, **dadurch gekennzeichnet, dass** die Antenne auf der Innenseite einer von beiden die Schichten des Datenträgers bildenden Decklagen aufgedruckt ist.

7. Datenträger nach einem der Ansprüche 1 bis 6, **dadurch gekennzeichnet, dass** auf die thermosensitive Beschichtung eine Beschriftung, insbesondere durch Siebdrucktechnik, aufgebracht ist.

8. Datenträger nach einem der Ansprüche 1 bis 7, **dadurch gekennzeichnet, dass** die thermosensitive Beschichtung auf die Decklage eines bereits laminierten Datenträgers aufgebracht ist.

9. Datenträger nach einem der Ansprüche 1 bis 8, **dadurch gekennzeichnet, dass** die thermosensitive Beschichtung als eine und/oder auf einer Folie auf einen vorgegebenen ersten Teilbereich der Außenseite der Decklage aufgebracht ist, wobei ein zweiter Teilbereich der Decklagenaußenseite von einer transparenten oder nicht transparenten Ausgleichslage vollflächig bedeckt ist.

## Claims

1. Multilayer-structured data carrier comprising at least one core lager (2) and at least one cover layer (3, 4) which layers are adhesively bonded together and wherein said core layer (2) is constituted of a thermoplastic material and said cover layer (3, 4) of a cardboard material, **characterized by** the fact that the core layer (2) is a multilayered structure that comprises an inner plastic layer (5) carrying an antenna coil (8) and a chip as well as first and second outer plastic layers (6) in full-face contact with said core layer, and that a thermosensitive coating is applied to a partial area of one outside face of the cover layer (3, 4).

2. Data carrier according to Claim 1, **characterized by** the fact that the core layer (2) is made of a PVC or a polycarbonate or a polyester or an ABS material.

3. Data carrier according to Claim 1 or 2, **characterized by** the fact that the antenna coil (8) and/or the chip is applied to the plastic layer (5) of the core layer (2).

4. Data carrier according to any of the preceding Claims 1 to 3, **characterized by** the fact that the first cover layer (3) and/or the second cover layer (4) is provided with a surface coating and/or a printed image.

5. Data carrier according to any of the preceding Claims 1 to 4, **characterized by** the fact that the data carrier is in the form of a check card and has a thickness in the range from 400 µm to 1000 µm.

6. Data carrier according to any of the preceding Claims 1 to 5, **characterized by** the fact that the antenna is imprinted to an inside face of anyone of the two cover layers constituting the data carrier.

7. Data carrier according to any of the preceding Claims 1 to 6, **characterized by** the fact that an inscription is applied to the thermosensitive coating, in particular by screen printing.

8. Data carrier according to any of the preceding Claims 1 to 7, **characterized by** the fact that the thermosensitive coating is applied to the cover layer of a previously laminated data carrier.

9. Data carrier according to any of the preceding Claims 1 to 8, **characterized by** the fact that the thermosensitive coating is in form of a sheet and/or is applied to a sheet within a predetermined first partial area on the outside of the cover layer while a second partial area on the outside of said cover layer is completely covered by a transparent or nontransparent compensating layer.

## Revendications

1. Support de données de structure multicouche avec au moins un coeur et avec au moins une couche de recouvrement (3, 4), qui sont reliées ensemble par adhérence, le coeur (2) consistant en un matériau thermoplastique et la couche de recouvrement (3, 4) consistant en du carton, **caractérisé en ce que** le coeur (2) multicouche consiste en une couche médiane en matière synthétique qui porte la bobine-antenne (8) et la puce et, de part et d'autre de celle-ci, en une première couche extérieure en matière synthétique (6) et en une deuxième couche extérieure en matière synthétique (7) qui sont appliquées en nappe sur les deux côtés de celle-ci, et **en ce qu'**un revêtement thermosensible est appliqué partiellement sur une surface extérieure de la couche de recouvrement (3, 4).

2. Support de données selon la revendication 1, **caractérisé en ce que** le coeur (2) est réalisé en PVC ou en polycarbonate ou en polyester.

3. Support de données selon revendication 1 ou 2, **caractérisé en ce que** la bobine-antenne (8) et / ou la puce sont déposées sur la couche de matière synthétique (5) du coeur (2).

4. Support de données selon l'une des revendications 1 à 3, **caractérisé en ce que** la première couche de recouvrement (3) et / ou la deuxième couche de recouvrement (4) sont pourvues d'un revêtement superficiel et / ou d'une image imprimée.

5. Support de données selon l'une des revendications 1 à 4, **caractérisé en ce que** le support de donnée est réalisé en forme de carte bancaire et que le support de données présente une épaisseur située dans un ordre de grandeur de 400 µm à 1000 µm.

6. Support de données selon l'une des revendications 1 à 5, **caractérisé en ce que** l'antenne est imprimée sur la surface intérieure de l'une des deux couches de recouvrement qui forment les couches du support de données.

7. Support de données selon l'une des revendications 1 à 6, **caractérisé en ce que**, sur le revêtement thermosensible, est appliquée une inscription, en particulier selon la technique sérigraphique.

8. Support de données selon l'une des revendications 1 à 7, **caractérisé en ce que** le revêtement thermosensible est appliqué sur la couche de recouvrement d'un support de données déjà laminé.

9. Support de données selon l'une des revendications 1 à 8, **caractérisé en ce que** le revêtement thermosensible est appliqué en tant que feuille et / ou sur une feuille, sur une première zone partielle, prédéterminée de la face extérieure de la couche de recouvrement, une deuxième zone partielle de la face extérieure de la couche de recouvrement étant revêtue, sur toute sa surface, d'une couche de compensation transparente ou non transparente.
